# EUROPEAN PATENT APPLICATION

(11) **EP 4 599 664 A1**
(43) Date of publication of application: **13.08.2025**
(21) Application number: 24156641.3
(22) Date of filing: 08.02.2024
(51) Int. Cl.: A01G 9/24, E06B 9/52

(54) **A GREENHOUSE**

(71) Applicant: Holland Gaas B.V., 2676 LS Maasdijk (NL)
(72) Inventor: HAARING, Roland, 2693 EE 's-Gravenzande (NL); SCHULTE, Marcel Johannes Gerardus, 2675 KJ Honselersdijk (NL); VAN MARKWIJK, Ronald Wilhelmus, 2685 SJ Poeldijk (NL)
(74) Representative: De Vries & Metman

(57) **Abstract**

A greenhouse (1) including an inclined roof (2) comprises an opening (6), a ventilation window (8) which is mounted to the roof (2) and pivotable with respect to the roof (2) about a pivot axis (PA) between a closed condition in which it covers the opening (6) and an open condition in which the opening (6) forms a ventilation passage between an inner side and an outer side of the greenhouse (1) and an insect netting (13) which is releasably mounted to the roof (2) and the ventilation window (8) through fixing members (17) so as to prevent insects from passing the ventilation passage in the open condition of the ventilation window (8). The fixing members (17) are accessible from the outer side of the greenhouse (1) so as to mount the insect netting (13) to the roof (2) and the ventilation window (8) from the outer side of the greenhouse (1) without being hindered by the insect netting (13).

## Description

The present invention relates to a greenhouse including an inclined roof comprising an opening, a ventilation window which is mounted to the roof and pivotable with respect to the roof about a pivot axis between a closed condition in which it covers the opening and an open condition in which the opening forms a ventilation passage between an inner side and an outer side of the greenhouse and an insect netting which is releasably mounted to the roof and the ventilation window through fixing members so as to prevent insects from passing the ventilation passage in the open condition of the ventilation window.

Such a greenhouse is known in the prior art. Since the insect netting is mounted to the roof and the ventilation window the insect netting forms a barrier for insects when the ventilation window is in the open condition. Undesired insects can be kept at the outer side of the greenhouse and desired insects can be kept in the inner side of the greenhouse when the ventilation window is in the open condition. The insect netting must be replaced periodically. Particularly, when the crops in the greenhouse occupy a great part of the available space during the whole year, replacement of the insect netting appears to be difficult. For example, in case of flower cultivation such as orchid cultivation persons who install the insect netting must be very careful to avoid damage to the flowers.

An object of the invention is to provide a greenhouse which facilitates installation of the insect netting.

This object is accomplished with the greenhouse according to the invention, which is characterized in that the fixing members are accessible from the outer side of the greenhouse so as to mount the insect netting to the roof and the ventilation window from the outer side of the greenhouse without being hindered by the insect netting.

The invention minimizes or avoids circumstances that a person who replaces the insect netting must work between the crops in the greenhouse. For example, the insect netting can be mounted to the roof and the ventilation window from a movable platform on top of the greenhouse. The insect netting may be mounted to the roof and the ventilation window from the outer side of the greenhouse when the ventilation window is in the open condition.

In an embodiment the fixing members are located at a side of the insect netting which faces the outer side of the greenhouse in the open condition of the ventilation window. This allows to mount the insect netting to the roof and the ventilation window from the outer side of the greenhouse when the ventilation window is in the open condition. Because of the location of the fixing members the insect netting does not form a barrier to a person who installs the fixing members to the roof and the ventilation window when the ventilation window is in the open condition.

In a particular embodiment the ventilation window is provided with an upper edge at the pivot axis, a lower edge at a distance from the upper edge and two side edges extending between the upper edge and the lower edge, wherein the opening is surrounded by an upper edge, a lower edge at a distance from the upper edge and two side edges extending between the upper edge and the lower edge, wherein the insect netting is releasably mounted to the lower edge and the side edges at the opening and to the lower edge and the side edges of the ventilation window through the fixing members.

The insect netting may be fixed to elongate profiles which are releasably mounted along the lower edge and the side edges at the opening and along the lower edge and the side edges of the ventilation window, respectively, through the fixing members. In practice, three separate profiles may be fixed to the insect netting for mounting them to the roof and three separate profiles may be fixed to the insect netting for mounting them to the ventilation window. The three separate profiles for being mounted to the roof and/or the three separate profiles for being mounted to the ventilation window may be fixed to each other, thus forming U-shaped profiles for example. They may be fixed to each other through welding, gluing or separate corner elements.

The insect netting may be sewn to the respective profiles, but alternative fixing means are conceivable.

In an embodiment at least one of the profiles has a base extending in a base plane and a flap which extends from the base at an angle with respect to the base plane, wherein the insect netting is fixed to the flap, wherein the base is fixed to one of the lower edge and the side edges at the opening and the lower edge and the side edges of the ventilation window through the fixing members. The angle may be an acute angle such that the flap is directed towards the opening.

The profile may be T-shaped wherein the base forms the top of the T from which the flap extends.

Preferably, the flap is flexible, since this allows the flap to bent when it contacts a counterpart upon moving the ventilation window from the open condition to the closed condition.

The flap may be more flexible than the base.

The thickness of the flap may decrease in a direction from the base to its free end, which makes a free end portion of the flap still more flexible.

The profiles are made of plastic, preferably made by extrusion.

The ventilation window may be rectangular.

The fixing members may be screws, but alternative fixing means are conceivable.

The lower edge and the side edges at the opening and the lower edge and the side edges of the ventilation window may be extruded profiles, preferably made of aluminium.

In the closed condition of the ventilation window the side edges of the ventilation window may be located above the side edges at the opening and the lower edge of the ventilation window may be located above the lower edge at the opening.

The invention will hereafter be elucidated with reference to very schematic drawings showing an embodiment of the invention by way of example.
Fig. 1 is a perspective view of a part an embodiment of a greenhouse according to the invention, showing a ventilation window in an open condition.
Fig. 2 is an enlarged sectional view of the greenhouse of Fig. 1 in a closed condition of the ventilation window.
Fig. 3 is an enlarged view of a part of Fig. 2 as indicated by III in Fig. 2.
Fig. 4 is an enlarged view of a part of Fig. 3 as indicated by IV in Fig. 3
Fig. 5 is an enlarged sectional view of the greenhouse of Fig. 1 in an open condition of the ventilation window.
Fig. 6 is a similar view as Fig. 5, but showing a closed condition of the ventilation window.
Fig. 7 is an enlarged view of a part of Fig. 5 as indicated by VII in Fig. 5.
Fig. 8 is an enlarged view of a part of Fig. 5 as indicated by VIII in Fig. 5.
Fig. 9 is an enlarged view of a part of Fig. 6 as indicated by IX in Fig. 6.

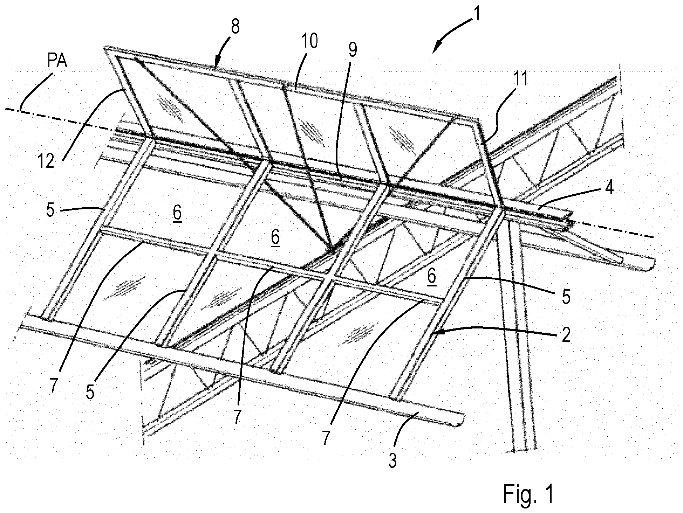

Fig. 1 shows a part of an embodiment of a greenhouse 1 according to the invention. The greenhouse 1 comprises an inclined roof 2, which is provided with a gutter 3 and a ridge 4. The gutter 3 and the ridge 4 are parallel to each other and interconnected through rods 5. Glass panes are fitted between the rods 5, the gutter 3 and the ridge 4. Fig. 1 shows a part of the roof 2 in which an opening 6 is formed. In this case the opening 6 is formed by three rectangular sub-openings which are each surrounded by parts of neighbouring rods 5, a part of the ridge 4 and intermediate bars 7. The intermediate bars 7 are parallel to the ridge 4 and the gutter 3. Below the opening 6 glass panes are fitted between the rods 5, the gutter 3 and the intermediate bars 7.

The greenhouse 1 is also provided with a ventilation window 8 which is mounted to the ridge 4. The ventilation window 8 is pivotable with respect to the ridge 4 about a pivot axis PA between a closed condition in which it covers the opening 6 and an open condition in which the opening 6 forms a ventilation passage between an inner side and an outer side of the greenhouse 1. The open condition is shown in Fig. 1. The ventilation window 8 can be opened and closed by means of a well-known mechanism.

The ventilation window 8 as shown in Fig. 1 is rectangular and comprises three glass panes. The ventilation window 8 is provided with an upper edge 9 which is located at the pivot axis PA and parallel to the pivot axis PA, a lower edge 10 which is located at a distance from the upper edge 9 and also parallel to the pivot axis PA and two parallel side edges 11, 12 which extend between the upper edge 9 and the lower edge 10. In the closed condition of the ventilation window 8 the lower edge 10 is located at a lower height level than the upper edge 9.

The opening 6 in the roof 2 is surrounded by an upper edge which is formed by a part of the ridge 4 in this case, a lower edge in the form of the intermediate bars 7 and two side edges in the form of parts of the rods 5. In the closed condition of the ventilation window 8 its side edges 11, 12 lie above respective rods 5 and the lower edge 10 lies above the intermediate bars 7.

The gutter 3, the ridge 4, the rods 5, the intermediate bars 7, the lower edge 10, the upper edge 9 and the side edges 11, 12 of the ventilation window 8 may be made of extruded aluminium profiles.

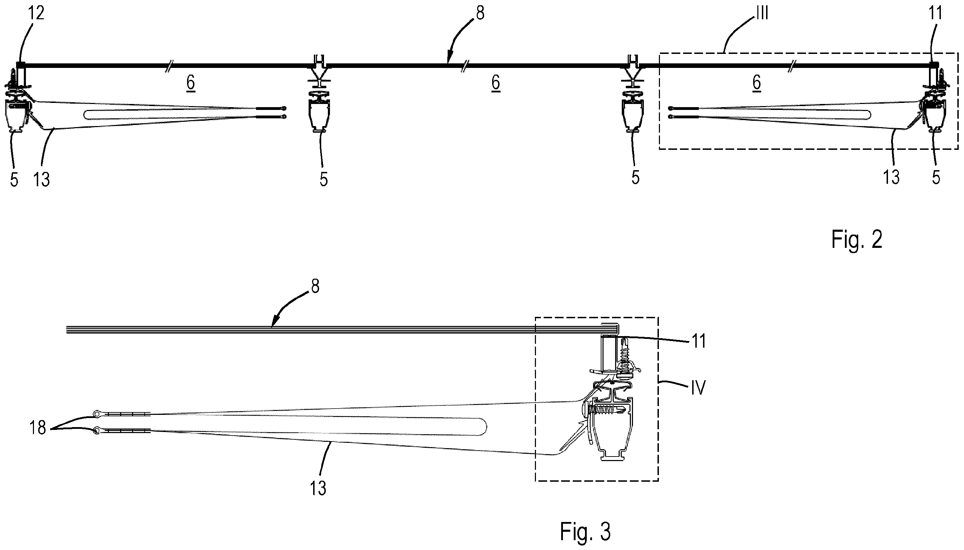

The greenhouse 1 is provided with an insect netting 13 (only shown in Figs. 2-9) which is releasably mounted to the roof 2 and the ventilation window 8 such that in case of opening the ventilation window 8 the insect netting 13 unfolds and forms a barrier for insects. In case of closing the ventilation window 8 the insect netting 13 is folded. This is illustrated in Figs. 2-9.

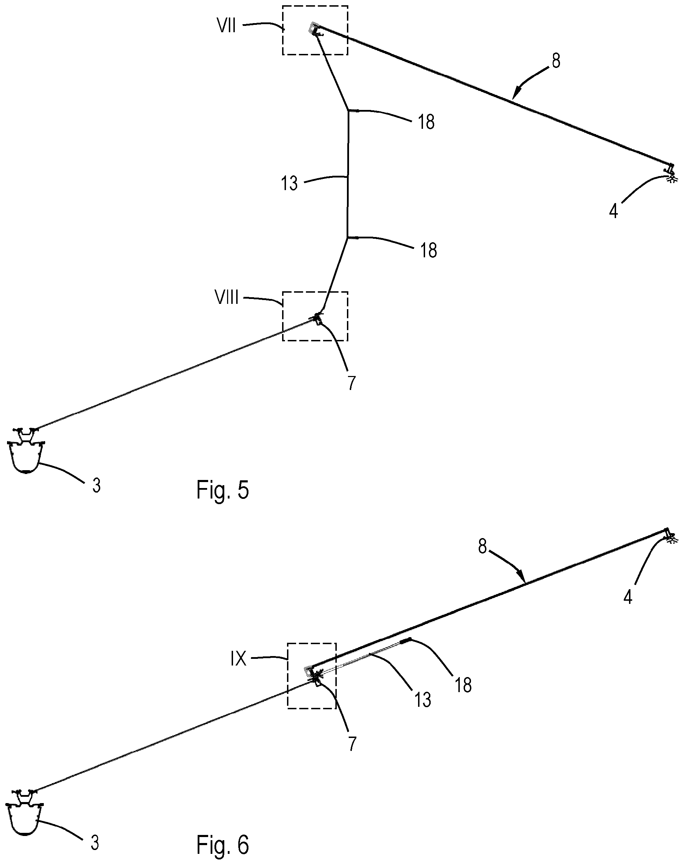

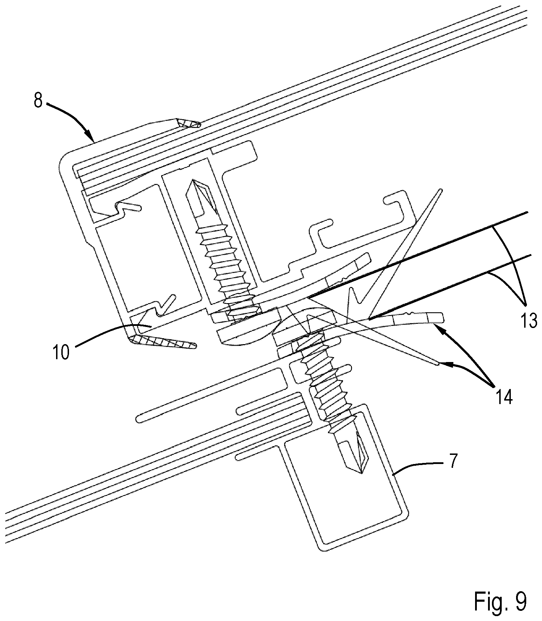

Figs. 2-4 show sectional views of the ventilation window 8 and the roof 2 in the closed condition of the ventilation window 8 as seen in a direction from the gutter 3 to the ridge 4. It can be seen that in the closed condition the side edges 11, 12 of the ventilation window 8 are located above the side edges 5 at the opening 6. Figs. 5-9 show sectional views of the ventilation window 8 and the roof 2 as seen in a direction parallel to the ridge 4 and the gutter 3. It can be seen in Fig. 9 that in the closed condition of the ventilation window 8 the lower edge 10 of the ventilation window 8 is located above the intermediate bars 7.

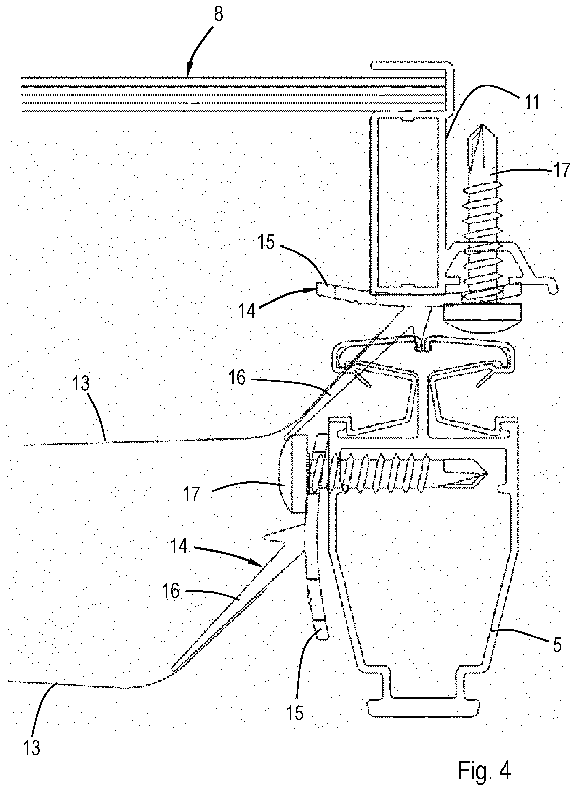

The insect netting 13 is fixed to elongate T-shaped profiles 14, see Fig. 4 for example, which may be made from extruded plastic. Each of the profiles 14 has a base 15 which extends in a base plane and a flap 16 which extends from the base 14 at an angle with respect to the base plane. The base 15 forms the top of the T-shape whereas the flap 16 extends therefrom. In this case the angle between the flap 16 and the base plane is about 45°, but this may be different in alternative embodiments. The insect netting 13 is fixed to the flap 16 through sewing but numerous alternative fixing means are conceivable. The flap 16 is more flexible than the base 15. The thickness of the flap 16 decreases in a direction from the base 15 to its free end.

Fig. 4 shows that one of the profiles 14 is fixed to a lower side of the side edge 11 of the ventilation window 8 through fixing members in the form of self-tapping screws 17. The flap 16 is directed downwardly towards the rod 5 which partly forms one of the side edges of the opening 6. In Fig. 4 the flap 16 has a straight shape, but in reality it will be bent inwardly due to contacting the rod 5. Fig. 4 also shows that the base 15 of one of the profiles 14 is fixed to a side of the rod 5 which partly forms one of the side edges of the opening 6 through fixing members in the form of self-tapping screws 17. The flap 16 projects into the opening 6.

Fig. 4 shows that the screws 17 are located at a side of the insect netting 13 which faces the outer side of the greenhouse 1 in the open condition of the ventilation window 8. This means that the profiles 14 can be mounted to the side edge 11 of the ventilation window 8 and the rod 5 when the ventilation window 8 is in the open condition from the outer side of the greenhouse 1 without being hindered by the insect netting 13. In other words, the screws 17 are accessible from the outer side of the greenhouse 1 so as to mount the insect netting 13 to the roof 2 and the ventilation window 8 from the outer side of the greenhouse 1 without being hindered by the insect netting 13.

In the embodiment as shown in Figs. 1-9 the insect netting 13 is provided with chords 18 including opposite ends which may be fixed to the roof 2 in order to keep the insect netting 13 in place when the ventilation window 5 is in the open condition and/or to force the insect netting 13 to move towards the inner side of the greenhouse 1 when the ventilation window 8 is moved from the open condition to the closed condition. The opposite ends of the respective chords 18 may be fixed to the ridge 4 nearby the respective side edges of the opening 6 such that they can be fixed from the outer side of the greenhouse 1 when the ventilation window 5 is in the open condition. The chords 18 form respective U-shapes when they are fixed to the roof 2 and may be flexible. In the closed condition of the ventilation window 8 each of the chords 18 extends substantially parallel to the ridge 4 to form a bottom of the U-shape and substantially parallel to the respective side edges of the opening 6 to form legs of the U-shape. Each of the chords 18 may be partly embedded in the insect netting 13 by means of sewing.

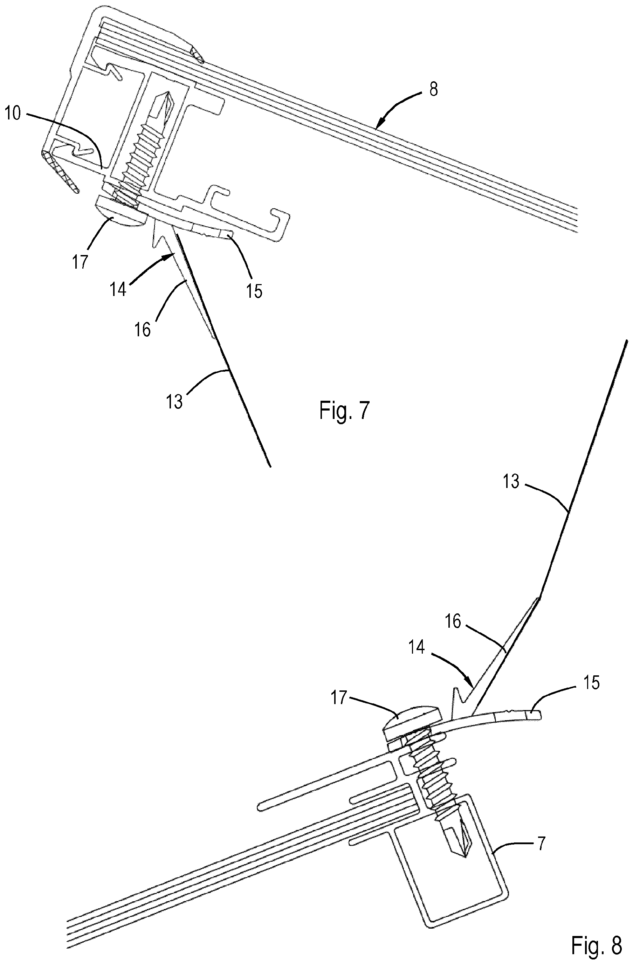

Figs. 7 and 8 show how the profiles 14 are fixed to the intermediate bars 7, i.e. the lower edge at the opening 6, and to the lower edge 10 of the ventilation window 8. More specifically, at the intermediate bars 7 the base 15 of the profile 14 is screwed to the upper side of the intermediate bars 7 such that the flap 16 is directed upwardly, whereas at the lower edge 10 of the ventilation window 8 the base 15 of the profile 14 is screwed to a lower side of the lower edge 10 of the ventilation window 8 such that the flap 16 is directed downwardly. The profiles 14 can be mounted to the lower edge at the opening 6 and to the lower edge 10 of the ventilation window 5 when the ventilation window 8 is in the open condition from the outer side of the greenhouse 1 without being hindered by the insect netting 13, since the screws 17 are located at a side of the insect netting 13 which faces the outer side of the greenhouse 1 in the open condition of the ventilation window 8.

Fig. 9 shows that the ventilation window 8 is in the closed condition, whereas the flaps 16 are shown as straight portions. However, due to the flexibility of the flaps 16 they will bend upon contacting a counterpart in reality.

The invention is not limited to the embodiment shown in the drawings and described hereinbefore, which may be varied in different manners within the scope of the claims and their technical equivalents. Numerous alternative fixing members instead of the screws are conceivable, for example a snap-fit element, a clip element, adhering means and the like. The insect netting may also comprise alternative profiles than the T-shaped profiles, for example profiles including L-shaped crosssections.

## Claims

1. A greenhouse (1) including an inclined roof (2) comprising an opening (6), a ventilation window (8) which is mounted to the roof (2) and pivotable with respect to the roof (2) about a pivot axis (PA) between a closed condition in which it covers the opening (6) and an open condition in which the opening (6) forms a ventilation passage between an inner side and an outer side of the greenhouse (1) and an insect netting (13) which is releasably mounted to the roof (2) and the ventilation window (8) through fixing members (17) so as to prevent insects from passing the ventilation passage in the open condition of the ventilation window (8), **characterized in that** the fixing members (17) are accessible from the outer side of the greenhouse (1) so as to mount the insect netting (13) to the roof (2) and the ventilation window (8) from the outer side of the greenhouse (1) without being hindered by the insect netting (13) .

2. A greenhouse (1) according to claim 1, wherein the fixing members (17) are located at a side of the insect netting (13) which faces the outer side of the greenhouse (1) in the open condition of the ventilation window (8).

3. A greenhouse (1) according to claim 1 or 2, wherein the ventilation window (8) is provided with an upper edge (9) at the pivot axis (PA), a lower edge (10) at a distance from the upper edge (9) and two side edges (11, 12) extending between the upper edge (9) and the lower edge (10), wherein the opening (6) is surrounded by an upper edge (4), a lower edge (7) at a distance from the upper edge (4) and two side edges (5) extending between the upper edge (4) and the lower edge (7), wherein the insect netting (13) is releasably mounted to the lower edge (7) and the side edges (5) at the opening (6) and to the lower edge (10) and the side edges (11, 12) of the ventilation window (8) through the fixing members (17).

4. A greenhouse (1) according to claim 3, wherein the insect netting (13) is fixed to elongate profiles (14) which are releasably mounted along the lower edge (7) and the side edges (5) at the opening (6) and along the lower edge (10) and the side edges (11, 12) of the ventilation window (8), respectively, through the fixing members (17).

5. A greenhouse (1) according to claim 4, wherein the insect netting (13) is sewn to the respective profiles (14).

6. A greenhouse (1) according to claim 4 or 5,
wherein at least one of the profiles (14) has a base (15) extending in a base plane and a flap (16) which extends from the base (15) at an angle with respect to the base plane, wherein the insect netting (13) is fixed to the flap (16), wherein the base (15) is fixed to one of the lower edge (7) and the side edges (5) at the opening (6) and the lower edge (10) and the side edges (11, 12) of the ventilation window (8) through the fixing members (17).

7. A greenhouse (1) according to claim 6, wherein the profile is T-shaped and the base (15) forms the top of the T from which the flap (16) extends.

8. A greenhouse (1) according to claim 6 or 7,
wherein the flap (16) is flexible.

9. A greenhouse (1) according to claim 8, wherein the flap (16) is more flexible than the base (15).

10. A greenhouse (1) according to claim 9, wherein the thickness of the flap (16) decreases in a direction from the base (15) to its free end.

11. A greenhouse (1) according to any one of the claims 4-10, wherein the profiles (14) are made of plastic, preferably made by extrusion.

12. A greenhouse (1) according to any one of the preceding claims, wherein the ventilation window (8) is rectangular.

13. A greenhouse (1) according to any one of the preceding claims, wherein the fixing members are screws (17).

14. A greenhouse (1) according to any one of the preceding claims and claim 3, wherein the lower edge (7) and the side edges (5) at the opening (6) and the lower edge (10) and the side edges (11, 12) of the ventilation window (8) are extruded profiles, preferably made of aluminium.

15. A greenhouse (1) according to any one of the preceding claims and claim 3, wherein in the closed condition of the ventilation window (8) the side edges (11, 12) of the ventilation window (8) are located above the side edges (5) at the opening (6) and the lower edge (10) of the ventilation window (8) is located above the lower edge (7) at the opening (6) .
